# EUROPÄISCHE PATENTSCHRIFT

(11) **EP 1 258 624 B1**
(45) Veröffentlichungstag und Bekanntmachung des Hinweises auf die Patenterteilung: **27.02.2008**
(21) Anmeldenummer: 02007689.9
(22) Anmeldetag: 05.04.2002
(51) Int. Cl.: F02M 35/10

(54) **Ansaugvorrichtung für eine Brennkraftmaschine**
Intake system for an internal combustion engine
Système d'alimentation pour un moteur à combustion interne

(30) Priorität: 15.05.2001 DE 10123492
(43) Veröffentlichungstag der Anmeldung: 20.11.2002
(73) Patentinhaber: Dr.Ing. h.c. F. Porsche Aktiengesellschaft, 70435 Stuttgart (DE)
(72) Erfinder: Storz, Eberhard, 74366 Kirchheim (DE)

(56) Entgegenhaltungen:
- EP-A- 0 456 957
- EP-A- 1 024 324
- US-A- 2 441 075
- US-A- 5 188 078
- US-A- 5 341 773
- US-A- 5 655 795

## Beschreibung

Die Erfindung betriff eine Ansaugvorrichtung für eine Brennkraftmaschine gemäß den Merkmalen des Anspruchs 1.

Es ist aus dem Stand der Technik allgemein bekannt, die zur Ansaugvorrichtung einer Brennkraftmaschine gehörenden Luftrohre bzw. Luftschläuche an den entsprechenden Bauteilen der Brennkraftmaschine, wie z. B. dem Drosselklappengehäuse beispielsweise über Schlauchschellen o. ä. verliersicher zu befestigen. Durch die zunehmend kompakte Bauweise im Motorraum ist die Zugänglichkeit für die Montage bzw. Demontage derartiger Verbindungen oft erschwert.

So ist beispielsweise aus der US 5.341.773 eine Befestigung einer Luftleitung an einem Drosselklappengehäuse dargestellt und beschrieben, bei der die Luftleitung über eine Art Haltetaschen Verbindung an einem Flanschabschnitt mit hakenförmigen Greifern des Drosselklappengehäuses befestigt ist.

Des weiteren zeigt die US-PS 2,441,075 eine Rohrkupplung, die mit Hilfe von Befestigungsstiften axial gesichert ist. Dazu weist ein innerer Rohrstutzen an seinem Außenumfang zwei Aussparungen auf, in die zur Verriegelung mit einem äußeren Rohrstutzen Wandungsabschnitte der am äußeren Rohrstutzen aufgenommenen Befestigungsstifte eingreifen.

Aufgabe der Erfindung ist es daher, für die an den verschiedenen Bauteilen der Ansaugvorrichtung vorgesehenen Luftleitungs-Verbindungen eine einfache, mit wenigen Handgriffen lösbare Befestigung vorzusehen.

Die Aufgabe wird erfindungsgemäß durch die im Anspruch 1 angegebenen Merkmale gelöst.

Mit Hilfe der an der Luftleitung vorgesehenen Befestigungselemente, die in eine außen am Umfang der Flanschfläche des Bauteils der Ansaugvorrichtung vorgesehene Aussparung eingreifen ist eine einfache und schnell zu lösende formschlüssige Verbindung beider Bauteile erreicht.

Durch die in den Unteransprüchen angegebenen Merkmale sind weitere vorteilhafte Ausgestaltungen und Verbesserungen der erfindungsgemäßen Ansaugvorrichtung für eine Brennkraftmaschine möglich.

In der Zeichnung werden zwei Ausführungsbeispiele der Erfindung gezeigt, die nachstehend näher beschrieben sind.

Es zeigen:
- Fig. 1: eine schematische Ansicht einer Ansaugvorrichtung,

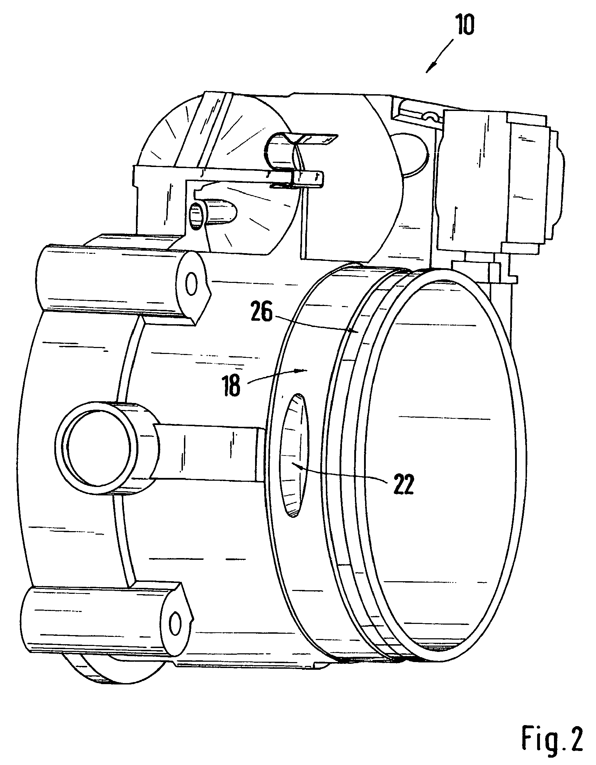

- Fig. 2: eine erste perspektivische Ansicht auf das Drosselklappengehäuse einer Brennkraftmaschine,
- Fig. 3: eine zweite perspektivische Ansicht auf das Drosselklappengehäuse einer Brennkraftmaschine,
- Fig. 4: eine Ansicht auf den Befestigungsstutzen eines Luftrohres,

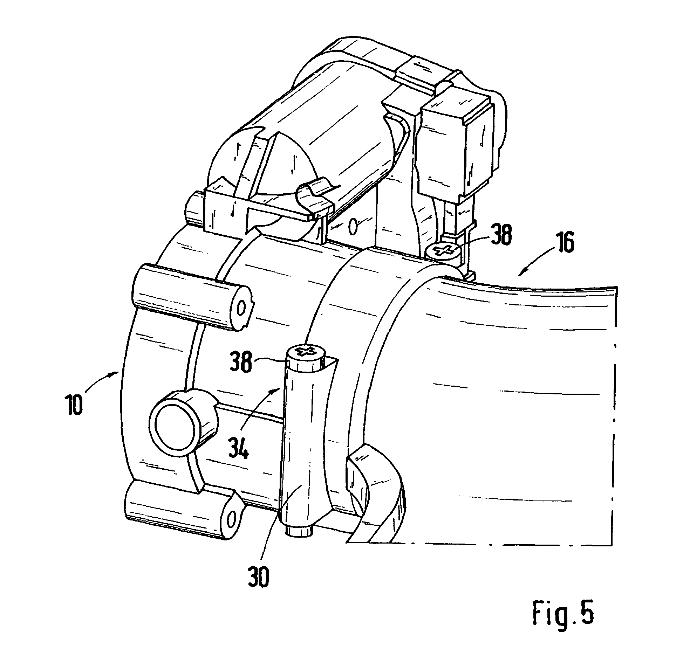

- Fig. 5: das am Drosselklappengehäuse befestigte Luftrohr,
- Fig. 6: einen Schnitt durch die Befestigungsverbindung,
- Fig. 7: eine Ansicht auf den Befestigungsstutzen eines Luftrohres gemäß einer zweiten Ausführungsform.

### Beschreibung der Ausführungsbeispiels

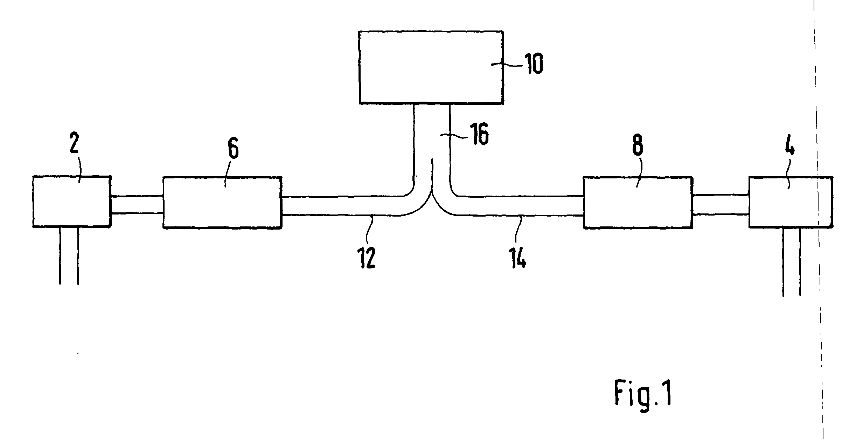

Die in Fig. 1 schematisch dargestellte Ansaugvorrichtung für eine zweireihige Brennkraftmaschine mit Turboaufladung, beispielsweise V8 - Turbomotor, besteht aus jeweils einem Luftfilter 2 und 4, zwei Ladeluftkühlern 6 und 8 und einem Drosselklappengehäuse 10, das an die motorseitig befestigte Sauganlage der Brennkraftmaschine angeschlossen ist. Die beiden, von den Ladeluftkühlern 6 und 8 zum Drosselklappengehäuse 10 führenden Luftleitungen 12 und 14 werden vor dem Drosselklappengehäuse 10 zu einem gemeinsamen Leitungsabschnitt, im folgenden als Y- Rohr 16 bezeichnet, zusammengeführt.

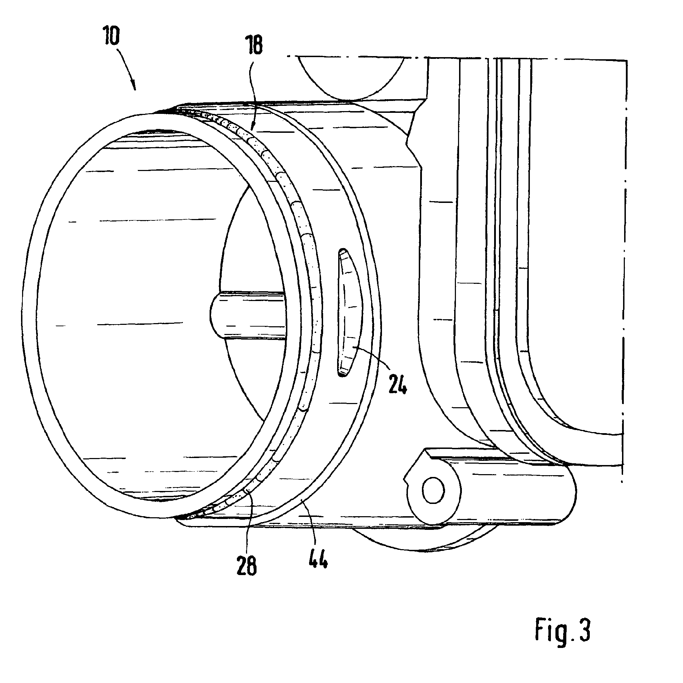

Zur Befestigung des Y- Rohres 16 am Drosselklappengehäuse 10 ist das Drosselklappengehäuse 10 mit einer einem als Ringkragen ausgebildeten Flansch 18 versehen, auf dem im montierten Zustand das Y- Rohr 16 mit seiner Öffnung 20 aufgesteckt und befestigt ist. Der Flansch 18 des Drosselklappengehäuses 10 weist zwei Aussparungen 22 und 24 auf, die wie später noch näher erläutert, zur Befestigung des Y - Rohres 16 am Drosselklappengehäuse 10 dienen. Im Ringkragen 18 ist weiterhin eine radial umlaufende Nut 26 eingebracht, in die zur Abdichtung beider Bauteile ein O - Ring 28 (siehe Fig. 3) eingelegt ist.

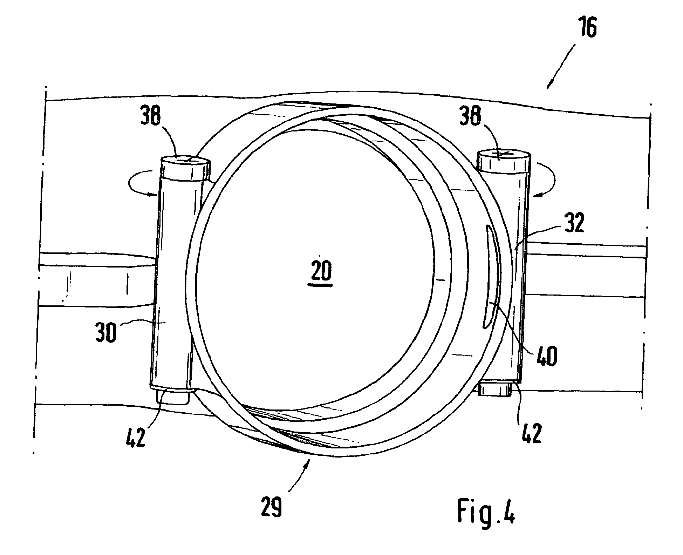

Der die Öffnung 20 bildende Rohrstutzen 29 des Y - Rohres 16 weist seitlich zwei angeformte Haltetaschen 30 und 32 auf, in denen zwei Verriegelungsbolzen 34 und 36 aufgenommen sind. Die Verriegelungsbolzen 34, 36 weisen einen Kopf 38 auf, der mit einer Innenverzahnung versehen ist. Die Verriegelungsbolzen 34, 36 sind mit jeweils einem zylindrischen Anschnitt 40 versehen, dessen Kontur im wesentlichen dem Außendurchmesser des Flansches 18 des Drosselklappengehäuses 10 bzw. dem Durchmesser der Öffnung 20 entspricht. Wie in Fig. 4 dargestellt, sind die beiden Verriegelungsbolzen 34, 36 an ihrem Ende mit einem Sprengring 42 versehen, so dass sie verliersicher in den Haltetaschen 30 und 32 aufgenommen sind.

Die Montage des Y - Rohres 16 am Drosselklappengehäuse 10 erfolgt auf folgende Art und Weise:

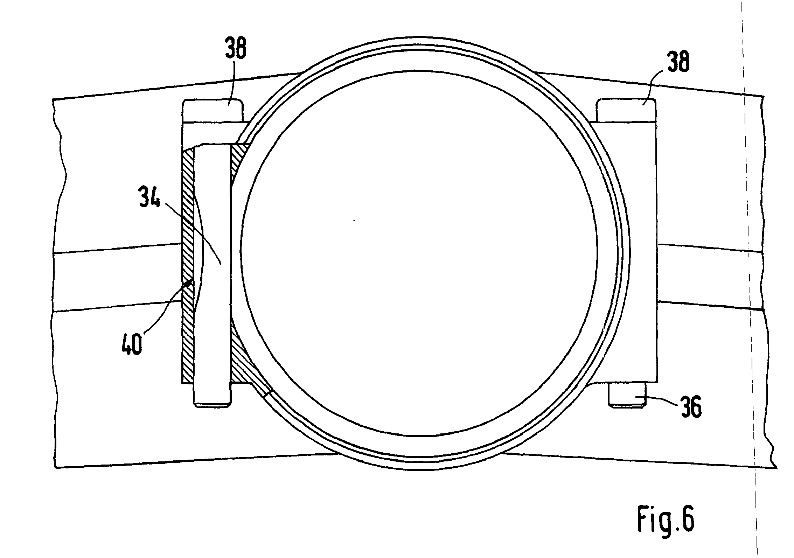

Die beiden in den Haltetaschen 30, 32 geführten Verriegelungsbolzen 34 und 36 werden so positioniert, dass die beiden zylindrischen Anschnitte 40 mit der Innenkontur des Rohrstutzens 29 des Y - Rohres 16 in Übereinstimmung gebracht sind. In dieser Position kann das Y - Rohr 16 auf den Flansch 18 des Drosselklappengehäuses 10 aufgeschoben werden, bis der Rohrstutzen 29 an einer Anschlagfläche 44 des Flansches 18 zum Anliegen kommt. Damit sind die beiden Verriegelungsbolzen 34, 36 in axialer Richtung in Übereinstimmung mit den beiden am Flansch 18 des Drosselklappengehäuses 10 eingebrachten Aussparungen 22 und 24 in Übereinstimmung gebracht. Danach werden die beiden Verriegelungsbolzen 34, 36 mit Hilfe eines in die Innenverzahnung des Kopfes 38 der Verriegelungsbolzen 34, 36 eingreifenden Werkzeuges um 180° verdreht. Durch die 180° - Verdrehung wird eine formschlüssige Verbindung zwischen dem Y - Rohr 16 und dem Drosselklappengehäuse 10 erreicht, da - wie insbes. in Fig. 6 erkennbar - die Außenkontur der Verriegelungsbolzen 34, 36 in die beiden Aussparungen 22 und 24 formschiüssig eingreifen.

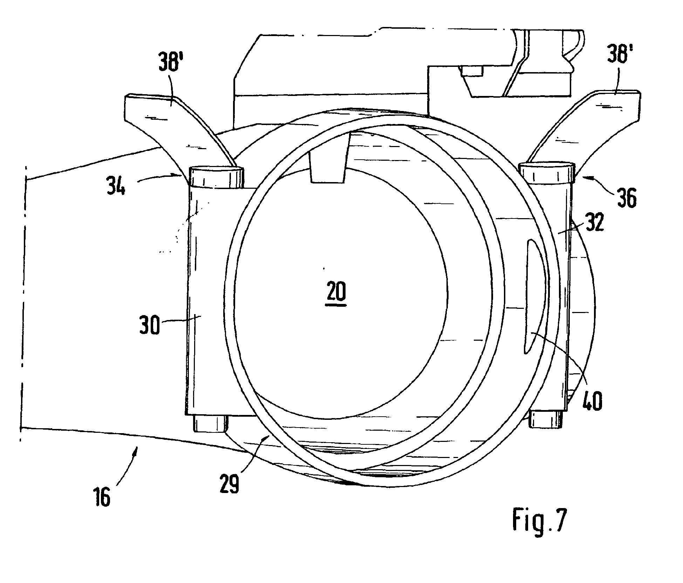

In Fig. 7 sind die Verriegelungsbolzen 34, 36 in einer leicht abgewandelten Ausführungsform dargestellt, die sich gegenüber der ersten Ausführungsform dadurch unterscheidet, dass der Kopf 38' mit einem Griffstück versehen ist, mit dem per Hand die Verriegelungsbolzen 34, 36 in die verriegelte bzw. entriegelte Position überführt weren können.

## Patentansprüche

1. Ansaugvorrichtung für eine Brennkraftmaschine mit einer Luftleitung, insbesondere Luftrohr, deren Ende auf einem Flansch eines Bauteils verliersicher und lösbar befestigt ist, wobei der Flansch (18) des Bauteils (10) mindestens eine Aussparung (22, 24) aufweist, in die im montierten Zustand der Verbindung an der Luftleitung (16) vorgesehene Befestigungselemente (34,36) eingreifen, so dass die Luftleitung (16) axial auf dem Flansch (18) des Bauteils (10) gesichert ist **dadurch gekennzeichnet, dass** die Befestigungselemente (34, 36) als Verriegelungsbolzen ausgebildet sind, die durch zwei seitlich am Rohrstutzen (29) der Luftleitung (16) vorgesehene Haltetaschen (30, 32) aufgenommen sind und zum Aufschieben der Luftleitung (16) auf den Flansch (18) des Bauteils (10) die Verriegelungsbolzen (34, 36) mit einem zylindrischen Anschnitt (40) versehen sind, dessen Kontur im wesentlichen dem Außendurchmesser des Flansches (18) des Drosselklappengehäuses (10) entspricht.

2. Ansaugvorrichtung nach Anspruch 1, **dadurch gekennzeichnet, dass** der Kopf (38) der Verriegelungsbolzen (34, 36) mit einer Innenverzahnung versehen ist.

3. Ansaugvorrichtung nach Anspruch 1 oder 2, **dadurch gekennzeichnet, dass** der Flansch (18) des Bauteils (10) eine radial umlaufende Nut (26) aufweist, in die ein Dichtring (28) eingreift.

4. Ansaugvorrichtung nach einem der vorhergehenden Ansprüche, **dadurch gekennzeichnet, dass** das Bauteil ein Drosselklappengehäuse (10) ist, an dessen Flansch (18) das gemeinsame Endrohr (16) von zwei Luftleitungen (12, 14) befestigt ist.

## Claims

1. Intake device for an internal combustion engine having an air line, in particular air pipe, whose end is captively and detachably fastened to a flange of a component, with the flange (18) of the component (10) having at least one cutout (22, 24) into which, in the assembled state of the connection, fastening elements (34, 36) which are provided on the air line (16) engage such that the air line (16) is axially secured on the flange (18) of the component (10), **characterized in that** the fastening elements (34, 36) are embodied as locking bolts which are held by two holding lugs (30, 32) which are provided laterally on the pipe socket (29) of the air line (16), and in order to slide the air line (16) onto the flange (18) of the component (10), the locking bolts (34, 36) are provided with a cylindrical notch (40) whose contour substantially corresponds to the outer diameter of the flange (18) of the throttle flap housing (10).

2. Intake device according to Claim 1, **characterized in that** the head (38) of the locking bolts (34, 36) is provided with an internal toothing.

3. Intake device according to Claim 1 or 2, **characterized in that** the flange (18) of the component (10) has a radially encircling groove (26) into which a sealing ring (28) engages.

4. Intake device according to one of the preceding claims, **characterized in that** the component is a throttle flap housing (10), to the flange (18) of which is fastened the common end pipe (16) of two air lines (12, 14).

## Revendications

1. Dispositif d'aspiration pour un moteur à combustion interne, comportant une canalisation d'air, notamment un tube à air, dont l'extrémité est fixée avec un système anti-perte et de manière dissociable sur une bride d'une composante, la bride (18) de la composante (10) présentant au moins un évidement (22, 24) dans lequel, à l'état monté du raccordement à la canalisation d'air (16), des éléments de fixation prévus (34, 36) s'engrènent, de sorte que la canalisation d'air (16) est fixée axialement sur la bride (18) de la composante (10), **caractérisé en ce que** les éléments de fixation (34, 36) sont réalisés sous forme de goujons de verrouillage qui sont reçus par deux poches de retenue (30, 32) prévues latéralement sur la tubulure (29) de la canalisation d'air (16) et que, pour glisser la canalisation d'air (16) sur la bride (18) de la composante (10), les goujons de verrouillage (34, 36) sont pourvus d'une incision cylindrique (40) dont le contour correspond sensiblement au diamètre extérieur de la bride (18) du boîtier du papillon des gaz (10).

2. Dispositif d'aspiration selon la revendication 1, **caractérisé en ce que** la tête (38) des goujons de verrouillage (34, 36) est pourvue d'une denture interne.

3. Dispositif d'aspiration selon la revendication 1 ou 2, **caractérisé en ce que** la bride (18) de la composante (10) présente une rainure radialement périphérique (26) dans laquelle s'engrène une bague d'étanchéité (28).

4. Dispositif d'aspiration selon l'une des revendications précédentes, **caractérisé en ce que** la composante est un boîtier de papillon des gaz (10) à la bride (18) duquel le tube terminal commun (16) de deux canalisations d'air (12, 14) est fixé.
